# EUROPEAN PATENT APPLICATION

(11) **EP 3 273 266 A1**
(43) Date of publication of application: **24.01.2018**
(21) Application number: 16382353.7
(22) Date of filing: 21.07.2016
(51) Int. Cl.: G01S 17/02, G01S 17/89, G01S 17/93, G01S 7/48, G01N 21/88, G06K 9/00

(54) **A SYSTEM AND A METHOD FOR SURFACE AERIAL INSPECTION**

(71) Applicant: Grupo Empresarial Copisa, S.L., 08902 l'Hospitalet de Llobregat (ES)
(72) Inventor: MEANA GARCÍA, José Luis, 28943 FUENLABRADA (ES); DE LA ESCALERA HUESO, Arturo, 28221 MAJADAHONDA (ES); NIEVA CARRASCO, Alberto, 28905 GETAFE (ES); ARMINGOL MORENO, José María, 28030 MADRID (ES); GARCÍA HERNÁNDEZ, Fernando, 28912 LEGANÉS (ES); MARTÍN GÓMEZ, David, 28011 MADRID (ES); MORENO OLIVO, Francisco Miguel, 30870 MAZARRÓN (ES); SAN JOSÉ GALLEGO, Luis Javier, 47010 VALLADOLID (ES); ABDULRAHMAN AL KAFF, Abdulla Hussien, 28913 LEGANÉS (ES); RUBIO LORCA, Carlos, 28002 MADRID (ES); GÓMEZ-CALCERRADA SÁNCHEZ, Pedro Antonio, 28342 VALDEMORO (ES)
(74) Representative: Oficina Ponti, SLP

(57) **Abstract**

The present invention relates to a system for surface aerial inspection, comprising:
- an unmanned aerial vehicle (V) comprising, on-board:
- colour image acquisition means for automatically acquiring colour images of a plurality of areas of said surface (S);
- three-dimensional distance acquisition means for automatically acquiring three-dimensional distance data of said plurality of areas of said surface (S); and
- spatial positioning means (P);

- processing means to process:
- said image colour data to identify therein image characteristic points of said surface (S),
- said three-dimensional distance data to correlate each of the identified image characteristic points with its three-dimensional distance values, providing a cloud of correlated points, and
- said spatial positioning data to georeference at least each of the acquired colour images.

The present invention also relates to a method for surface aerial inspection adapted to use the system of the invention.

## Description

### FIELD OF THE INVENTION

The present invention relates to a system and a method for surface aerial inspection, which is particularly applicable, among others, to the detection and monitoring of cracks in the inspected surface.

### BACKGROUND OF THE INVENTION

There are several systems known in the art for surface inspections, particularly for inspecting surfaces of buildings, bridges, or other kind of infrastructures, in some cases in order to detect and monitor possible cracks appearing in said surfaces. Some of said systems are called crack monitoring systems, and physically contact the surface in order to detect such cracks, and/or attach a crack monitoring probe on the crack in order to monitor its evolution along time.

Some of said surfaces are located at zones which are inaccessible to an operator, such as those included at very high regions of, for example a building or a bridge. For those cases, it is known the use of unmanned aerial vehicles (UAV) including different kind of detection devices to perform a surface aerial inspection.

One of those known systems was developed by the present applicant and includes an UAV, particularly a drone, with an on-board thermal digital camera to perform a surface aerial inspection. Said system and method include the features of the preamble clauses of, respectively, claims 1 and 9 of the present invention.

Another of said known systems is disclosed in patent document WO2012013878A1 and includes a drone with an on-board measuring probe, wherein said probe (generally an ultrasound probe) need to contact the surface to be inspected in order to work properly.

All of the known systems and methods for surface aerial inspection, including the ones disclosed by the above mentioned patent documents, offer measurements which are clearly improvable.

It is, therefore, necessary to provide an alternative to the state of the art which covers the gaps found therein, by providing a system and a method for surface aerial inspection which provides improved measurements in comparison with the prior art systems and methods.

### SUMMARY OF THE INVENTION

To that end, the present invention relates, in a first aspect, to a system for surface aerial inspection, comprising, in a known manner:
- an unmanned aerial vehicle adapted to fly, at least in part automatically, towards a surface for performing surface inspection tasks, and comprising, on-board, image acquisition means for automatically acquiring images of a plurality of areas of said surface; and
- processing means connected to said image acquisition means to receive image data of said images, and adapted to process said received image data.

In contrast with the known systems, in the system of the first aspect of the present invention, in a characteristic manner:
said image acquisition means are colour image acquisition means for automatically acquiring colour images of a plurality of areas of said surface;
said unmanned aerial vehicle further comprises, on-board:
   - three-dimensional distance acquisition means for automatically acquiring three-dimensional distance data of said plurality of areas of said surface; and
   - spatial positioning means;
said processing means are connected to said image acquisition means, said distance acquisition means and said spatial positioning means to respectively receive colour data of said colour images, said three-dimensional distance data and spatial positioning data, and adapted to process:
   - said received image colour data to identify therein image characteristic points of said surface;
   - said three-dimensional distance data to correlate each of the identified image characteristic points with its three-dimensional distance values, providing a cloud of correlated points, and
   - said spatial positioning data to georeference at least each of the acquired colour images.

For an embodiment, said three-dimensional distance acquisition means comprise a three-dimensional camera, while for another embodiment the three-dimensional distance acquisition means comprise a Lidar (Light Imaging Detection and Ranging).

For a further embodiment, the three-dimensional distance acquisition means comprises a stereo camera system comprising first and second colour cameras, wherein the above mentioned colour image acquisition means comprise at least one of said first and second colour cameras.

Regarding the above mentioned spatial positioning means, for some embodiments, they comprise, on board the unmanned aerial vehicle, at least one of a GPS, a barometer, and inertial sensors, although any other kind of systems or mechanisms for spatial positioning considered as adequate by the skilled person can also be used according to the invention.

Preferably, the above mentioned processing means comprise at least an on-board processing entity (i.e. a processing entity on-board of the unmanned aerial vehicle) and, generally, further comprise an off-board processing entity connected to said on-board processing entity and adapted to carry out at least part of the above mentioned data processing.

For an embodiment, the on-board processing entity is adapted to process the received three-dimensional distance data, in real time or near real time, to calculate a first safety distance to be maintained by the unmanned aerial vehicle with respect to the surface, and wherein the system comprises control means connected to the on-board processing entity to receive data regarding said calculated first safety distance and adapted to automatically fly the unmanned aerial vehicle towards and along the surface maintaining said safety distance thereto, according to an inspection mode.

According to an embodiment, the three-dimensional acquisition distance means is also adapted to acquire three-dimensional distance data of an obstacle located between the surface and the unmanned aerial vehicle, wherein the on-board processing entity is also adapted to process the acquired three-dimensional distance data of said obstacle, in real time or near real time, to calculate a second safety distance to be maintained by the unmanned aerial vehicle with respect to the obstacle, and wherein the system comprises control means connected to the on-board processing entity to receive data associated to said calculated second safety distance and adapted to automatically fly the unmanned aerial vehicle away from the detected obstacle at or above said second safety distance thereto, according to an avoidance mode having a higher priority than said inspection mode.

The present invention also relates, in a second aspect, to a method for surface aerial inspection, comprising, in a known manner:
- flying, at least in part automatically, an unmanned aerial vehicle towards a surface) for performing surface inspection tasks;
- automatically acquiring images of a plurality of areas of said surface with on-board image acquisition means; and
- processing said received image data;

In contrast with the prior art methods, in the method of the second aspect of the invention:
said images of a plurality of areas of said surface automatically acquired are colour images acquired with on-board colour image acquisition means,
the method further comprises:
   - automatically acquiring three-dimensional distance data of said plurality of areas of said surface with on-board three-dimensional distance acquisition means;
   - providing spatial positioning data;
and the above mentioned processing step comprises:
   - processing colour data of said colour images to identify therein image characteristic points of said surface,
   - processing said three-dimensional distance data to correlate each of the identified image characteristic points with its three-dimensional distance values, providing a cloud of correlated characteristic points, and
   - processing said spatial positioning data to georeference at least each of the acquired colour images.

According to the method of the second aspect of the invention, for an embodiment, said identifying of characteristic points is performed based on the amount of image information included in the pixels of the acquired colour image, wherein those pixels including an amount of image information above a determined threshold (whether because they contain much texture or a large colour variation) being identified as characteristic points.

The method of the second aspect of the invention further comprises, for an embodiment, storing in memory said cloud of correlated characteristic points, performing a further aerial inspection of said surface with the unmanned aerial vehicle to obtain a further cloud of correlated characteristic points, and performing a comparison between said further cloud of correlated characteristic points and said stored cloud of correlated characteristic points to look for discrepancies.

Although the method of the second aspect of the invention (and also the system of the first aspect) can be applied to a large and diverse number of different applications, for a preferred embodiment it is applied to the detection and monitoring of cracks in the inspected surface, the above mentioned discrepancies being related to the evolution of a detected crack.

According to an embodiment, the method of the second aspect of the invention comprises inspecting a plurality of different surfaces, classifying and storing in memory the corresponding clouds of correlated characteristic points for the inspected surfaces, or images associated thereto, with an identity signature assigned to each of them, and using said identity signature for pattern recognition of a surface sharing the same identity signature in further aerial inspections.

The method of the second aspect of the invention comprises, for different embodiments, using the system of the first aspect of the invention, being the above description of embodiments of the system of the first aspect of the invention as valid for describing corresponding embodiments of the method of the second aspect of the invention.

According to an embodiment of the method of the present invention, it comprises concurrently controlling the fly of the unmanned aerial vehicle in part automatically and in part manually by control orders provided by an operator, wherein said control orders are ignored when they cause the unmanned aerial vehicle not to maintain the above mentioned first safety distance and, in case an obstacle is detected, not to maintain the above mentioned second safety distance.

### BRIEF DESCRIPTION OF THE FIGURES

In the following some preferred embodiments of the invention will be described with reference to the enclosed figures. They are provided only for illustration purposes without however limiting the scope of the invention.
Figure 1 schematically shows the system of the first aspect of the invention, for an embodiment.
Figure 2 is a functional block diagram showing the steps of the method of the second aspect of the invention, for an embodiment.

### DESCRIPTION OF THE PREFERRED EMBODIMENTS

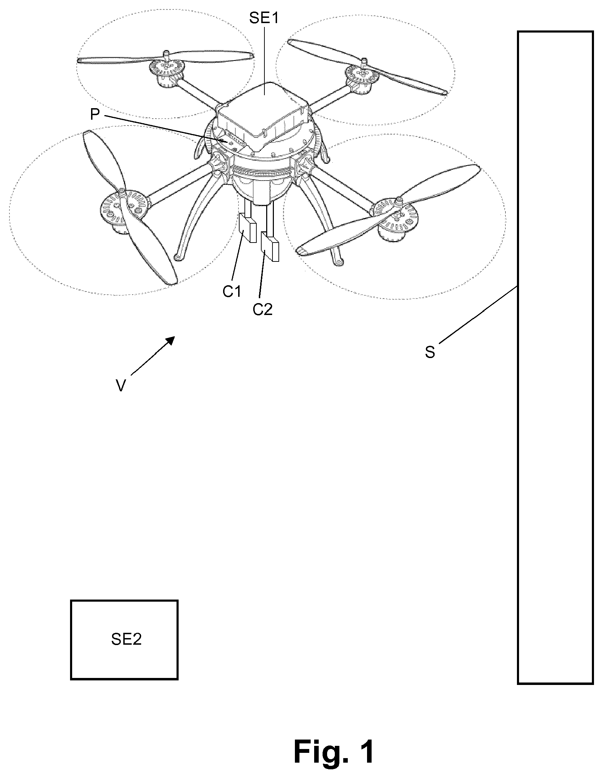

As shown in Figure 1, the system for surface aerial inspection of the first aspect of the present invention comprises:
- an unmanned aerial vehicle V, such as a drone, adapted to fly, at least in part automatically, towards a surface S for performing surface inspection tasks, and comprising, on-board:
   - colour image acquisition means for automatically acquiring colour images of a plurality of areas of said surface S;
   - three-dimensional distance acquisition means for automatically acquiring three-dimensional distance data of said plurality of areas of said surface S; and
   - spatial positioning means P;
   and
- processing means connected to said image acquisition means, said distance acquisition means and said spatial positioning means to respectively receive colour data of said colour images, said three-dimensional distance data and spatial positioning data, and adapted to process:
   - said received image colour data to identify therein image characteristic points of said surface S,
   - said three-dimensional distance data to correlate each of the identified image characteristic points with its three-dimensional distance values, providing a cloud of correlated points, and
   - said spatial positioning data to georeference at least each of the acquired colour images.

For the illustrated embodiment, the three-dimensional distance acquisition means comprises a stereo camera system comprising first C1 and second C2 colour cameras, and the colour image acquisition means comprise one or both of said first C1 and second C2 colour cameras.

The processing means comprise, for the illustrated embodiment, an on-board processing entity SE1 and, connected thereto (in this case wirelessly), an off-board processing entity SE2, wherein the above mentioned data processing can be performed in a distributed manner between both entities SE1, SE2, or only in one of both entities SE1, SE2.

For an embodiment, the system comprises as a RPAS (Remotely Piloted Aircraft System) where the unmanned aerial vehicle is the RPA (Remotely Piloted Aircraft) and the base station is constituted by the off-board processing entity SE2.

The system is particularly applicable to analysis of facades and of other infrastructure surfaces applying artificial vision algorithms.

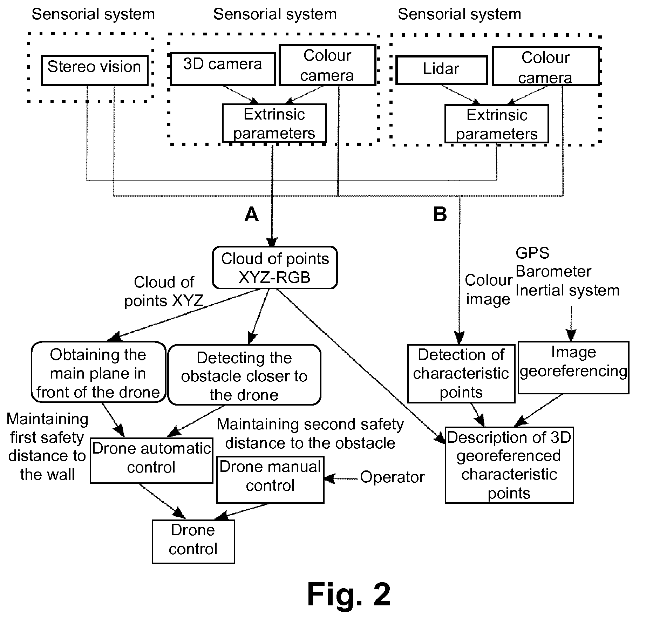

The method of the second aspect of the present invention is described below, for an embodiment, with reference to the diagram shown in Figure 2, from which it can be seen that information obtained from the inspection of the surface is used also for controlling the flight mode of the drone.

As shown in the diagram of Figure 2, the information flow (i.e. the data acquired with the colour image acquisition means and with the 3D distance acquisition means) is divided into two directions, identified as flow A and flow B and described below, where flow A is intended for controlling the drone, while flow B is intended for analysing the data obtained from the inspection of the surface S.

As shown at the upper region of the diagram of Figure 2, the above called colour image acquisition means and 3D distance acquisition means are identified as "Sensorial system", and three possible alternative implementations for said sensorial system are shown, particularly (from left to right): a stereo vision implementation formed by two colour cameras, an implementation formed by a 3D camera and a colour camera, and an implementation formed by a Lidar and colour camera. In all three cases, first a calibration step is performed where extrinsic parameters, orientation and relative position between the sensors are obtained. In use (i.e. after the calibration step), as a result of the surface inspection, a cloud of points is generated, each point including distance information (X, Y, Z) and colour information (R, G, B). Flows A and B are described below.

### Flow A). Using the obtained dense cloud of distances points (X, Y, Z).

With this information, two different types of objects are detected according to the following tasks:
- I) From XYZ distance information the main plane of the surface S in front of the drone is detected, where distance to the surface S and orientation to the plane (for example, a facade) is obtained. This XYZ information is also used to calculate the above mentioned first safety distance, such that a safety distance sensor is implemented, preventing the drone to get too close to the surface S. This function is performed by the drone autonomously, allowing scanning the surface S at a constant distance (generally pre-set by the pilot) and preventing that a human error, or the effect of wind, causes the drone to crash against the surface S.
- II) During the scanning operation of the surface S, there can be obstacles located between the drone and the surface S, such as, in the case of a building facade: projecting elements, cornices, downspouts, etc. Those obstacles are detected by the sensory system, particularly by analysing the XYZ distance information and calculating the above mentioned second safety distance, not missing at any moment the reference to the plane of the surface S being scanned.

As shown in the diagram of Figure 2, the above described two tasks are performed independently and concurrently with flight orders provided by the pilot/operator through a remote control, i.e. the "drone automatic control" is performed concurrently with the "drone manual control". The control system in charge of controlling the fly of the drone, for the illustrated embodiment, always obeys to the manual operator/pilot orders while there is no safety hazard detected by the two systems described above (I) and II)). If some of said safety hazards are detected, the orders of the operator/pilot are ignored in order to maintain the minimum distance to any object, i.e. second safety distance, and the distance to the wall, i.e. the first safety distance, with a higher priority assigned to the second safety distance.

### Flow B) Colour image (obtaining characteristic points // Telemetry, cloud (X, Y, Z).

In this processing flow, the identification of the characteristic points of the analysed area is obtained, i.e., which parts of the colour image have more information, either because they contain a lot of texture or because they show a large variation in colour. The spatial positioning is also obtained, by means of the on-board GPS, barometer and inertial sensors, implementing an odometry system. The goal is to repeat the position in a future monitoring/inspection flight by allowing, for example by means of a user interface, to make comparisons of historical images and surface measurements, to apply different kind of image filters, etc.

To that end, the colour image is analysed looking for the characteristic points included therein. As the information XYZ-RGB information has been obtained, the 3D distance between the drone and the desired point of the inspected surface is calculated. In turn, as the position and orientation of the drone is known, thanks to the odometry system, the drone, and thus the image obtained, can be georeferenced with respect to the starting position for further analysis or comparison with other flights of the drone.

The obtained data (XYZ-RGB) are geo-referenced and generally stored in files having a standard file format, so that said files can be opened by means of a user interface (UI), allowing the user to select points for obtaining measurements, compare images over time and associated telemetric data, as well as the possibility of generating inspection reports.

The standard format of the files containing the obtained information can be imported into BIM (Building Information Modelling) systems and/or management systems by data mining.

A software application for implementing the method of the present invention can be made in open architecture with any graphics-capable hardware and with any operating system at the base computing station (like Windows@ and Linux®) and at the flight computing controllers (such as Linux®). For an embodiment, said software application can be fully integrated in the on-board processing entity SE1, i.e. aboard the drone, and the detection scope and precision of the sensors of the sensorial system can be as high as to generate, in real time, 3D maps having depth data, which is very useful for different applications associated to the inspection of surfaces of a variety of infrastructures.

A person skilled in the art could introduce changes and modifications in the embodiments described without departing from the scope of the invention as it is defined in the attached claims.

## Claims

1. A system for surface aerial inspection, comprising:
- an unmanned aerial vehicle (V) adapted to fly, at least in part automatically, towards a surface (S) for performing surface inspection tasks, and comprising, on-board, image acquisition means for automatically acquiring images of a plurality of areas of said surface (S); and
- processing means connected to said image acquisition means to receive image data of said images, and adapted to process said received image data;
**characterised in that**:
said image acquisition means are colour image acquisition means for automatically acquiring colour images of a plurality of areas of said surface (S);
said unmanned aerial vehicle (V) further comprises, on-board:
- three-dimensional distance acquisition means for automatically acquiring three-dimensional distance data of said plurality of areas of said surface (S); and
- spatial positioning means (P);
said processing means are connected to said image acquisition means, said distance acquisition means and said spatial positioning means (P) to respectively receive colour data of said colour images, said three-dimensional distance data and spatial positioning data, and adapted to process:
- said received image colour data to identify therein image characteristic points of said surface (S),
- said three-dimensional distance data to correlate each of the identified image characteristic points with its three-dimensional distance values, providing a cloud of correlated points, and
- said spatial positioning data to georeference at least each of the acquired colour images.

2. A system according to claim 1, wherein said three-dimensional distance acquisition means comprise at least one of a three-dimensional camera and a Lidar.

3. A system according to claim 1, wherein said three-dimensional distance acquisition means comprises a stereo camera system comprising first (C1) and second (C2) colour cameras, wherein said colour image acquisition means comprise at least one of said first and second colour cameras.

4. A system according to any of the previous claims, wherein said processing means comprise at least an on-board processing entity (SE1).

5. A system according to claim 4, wherein said processing means further comprise an off-board processing entity (SE2) connected to said on-board processing entity (SE1) and adapted to carry out at least part of said data processing.

6. A system according to claim 4 or 5, wherein said on-board processing entity (SE1) is adapted to process the received three-dimensional distance data, in real time or near real time, to calculate a first safety distance to be maintained by the unmanned aerial vehicle (V) with respect to the surface (S), and wherein the system comprises control means connected to the on-board processing entity (SE1) to receive data regarding said calculated first safety distance and adapted to automatically fly the unmanned aerial vehicle (V) towards and along the surface (S) maintaining said safety distance thereto, according to an inspection mode.

7. A system according to claim 6, wherein said three-dimensional acquisition distance means is also adapted to acquire three-dimensional distance data of an obstacle located between the surface and the unmanned aerial vehicle (V), wherein said on-board processing entity (SE1) is also adapted to process the acquired three-dimensional distance data of said obstacle, in real time or near real time, to calculate a second safety distance to be maintained by the unmanned aerial vehicle (V) with respect to the obstacle, and wherein the system comprises control means connected to the on-board processing entity (SE1) to receive data associated to said calculated second safety distance and adapted to automatically fly the unmanned aerial vehicle (V) away from the detected obstacle at or above said second safety distance thereto, according to an avoidance mode having a higher priority than said inspection mode.

8. A system according to any of the previous claims, wherein said spatial positioning means (P) comprise, on board the unmanned aerial vehicle, at least one of a GPS, a barometer, and inertial sensors.

9. A method for surface aerial inspection, comprising:
- flying, at least in part automatically, an unmanned aerial vehicle (V) towards a surface (S) for performing surface inspection tasks;
- automatically acquiring images of a plurality of areas of said surface (S) with on-board image acquisition means; and
- processing said received image data;
**characterised in that**:
said images of a plurality of areas of said surface (S) automatically acquired are colour images acquired with on-board colour image acquisition means,
the method further comprises:
- automatically acquiring three-dimensional distance data of said plurality of areas of said surface (S) with on-board three-dimensional distance acquisition means;
- providing spatial positioning data;
and **in that** said processing step comprises:
- processing colour data of said colour images to identify therein image characteristic points of said surface (S),
- processing said three-dimensional distance data to correlate each of the identified image characteristic points with its three-dimensional distance values, providing a cloud of correlated characteristic points, and
- processing said spatial positioning data to georeference at least each of the acquired colour images.

10. A method according to claim 9, wherein said identifying of characteristic points is performed based on the amount of image information included in the pixels of the acquired colour image, wherein those pixels including an amount of image information above a determined threshold being identified as characteristic points.

11. A method according to claim 10, comprising storing in memory said cloud of correlated characteristic points, performing a further aerial inspection of said surface (S) with the unmanned aerial vehicle (V) to obtain a further cloud of correlated characteristic points, and performing a comparison between said further cloud of correlated characteristic points and said stored cloud of correlated characteristic points to look for discrepancies.

12. A method according to claim 11, wherein it is applied to the detection and monitoring of cracks in said surface (S), said discrepancies being related to the evolution of a detected crack.

13. A method according to claim 12, comprising inspecting a plurality of different surfaces, classifying and storing in memory the corresponding clouds of correlated characteristic points for the inspected surfaces, or images associated thereto, with an identity signature assigned to each of them, and using said identity signature for pattern recognition of a surface sharing the same identity signature in further aerial inspections.

14. A method according to any of claims 9 to 13, comprising using the system of any of claims 1 to 8 for performing the steps of the method.

15. A method according to claim 14, comprising using the system of claim 7, the method comprising concurrently controlling the fly of the unmanned aerial vehicle (V) in part automatically and in part manually by control orders provided by a operator, wherein said control orders are ignored when they cause the unmanned aerial vehicle not to maintain said first safety distance and, in case an obstacle is detected, not to maintain said second safety distance.
